# EUROPÄISCHE PATENTSCHRIFT

(11) **EP 2 377 682 B1**
(45) Veröffentlichungstag und Bekanntmachung des Hinweises auf die Patenterteilung: **30.08.2017**
(21) Anmeldenummer: 10004045.0
(22) Anmeldetag: 16.04.2010
(51) Int. Cl.: B32B 27/08, B32B 27/30, B32B 27/32, B32B 27/34, B32B 27/36, B32B 7/14, B32B 7/06, B32B 7/12, B65D 75/58

(54) **VERFAHREN ZUR HERSTELLUNG EINER MEHRLAGIGEN VERPACKUNGSFOLIE**
METHOD FOR PRODUCING A MULTI-LAYER PACKAGING FILM
PROCÉDÉ DE FABRICATION D'UNE FEUILLE D'EMBALLAGE MULTICOUCHE

(43) Veröffentlichungstag der Anmeldung: 19.10.2011
(73) Patentinhaber: Mondi Consumer Packaging International AG, 48599 Gronau (DE)
(72) Erfinder: Perick, Matthias, 48683 Ahaus-Altstätte (DE)
(74) Vertreter: Lorenz, Bernd Ingo Thaddeus

(56) Entgegenhaltungen:
- EP-A1- 1 449 789
- EP-A1- 1 849 579
- WO-A1-2008/115693
- US-A1- 2006 200 107

## Beschreibung

Die Erfindung betrifft ein Verfahren zur Herstellung einer mehrlagigen Verpackungsfolie, die entlang einer Schwächungslinie unter Freisetzen einer streifenförmigen Klebefläche aufgerissen werden kann. Die streifenförmige Klebefläche bildet einen Wiederverschluss. Die Verpackungsfolie kann insbesondere für Verpackungen für Feuchttücher, z. B. lotionsgetränkte Hygiene-, Kosmetik- oder Reinigungstücher verwendet werden.

Feuchttücher werden in Folienverpackungen bereit gehalten, aus denen sie einzeln entnommen werden können. Die Feuchttücher sind dabei üblicherweise überlappend gefaltet, so dass durch die Entnahme eines Feuchttuches auch der Anfang des nachfolgenden Tuches herausgezogen wird. Um nach der Entnahme eines Feuchttuches das Austrocknen der in der Verpackung verbleibenden Tücher zu vermeiden, werden auf die Verpackungen selbstklebende Etiketten aufgebracht, welche einen Aufreißbereich der Verpackung überdecken und nach der erstmaligen Öffnung der Verpackung einen Wiederverschluss der Entnahmeöffnung ermöglichen (EP 0 030 348 B1, WO 96/11147 A1).

Das nachträgliche Aufbringen eines großflächigen Haftetiketts verteuert die Verpackungen, die als Massenartikel sehr kostengünstig gefertigt werden müssen. Nachteilig ist auch, dass die Haftetiketten an der Beutelaußenseite überstehen, was das Stapeln, Handhaben, Transportieren und Abpacken der Beutel in größeren Gebinden erschwert.

Aus EP 1 449 789 B1 ist eine Verpackungsfolie bekannt, die entlang einer Schwächungslinie unter Freisetzen einer streifenförmigen Klebefläche aufgerissen werden kann. Die freigelegte Klebefläche wird als Wiederverschluss benutzt. Die Verpackungsfolie besteht aus einer die Verpackungsinnenseite bildenden inneren Folie, die mit einer die Aufreißöffnung begrenzenden ersten Schwächungslinie versehen wird, und einer äußeren Folie, die eine zweite Schwächungslinie aufweist. Die beiden Schwächungslinien sind seitlich zueinander versetzt angeordnet, wobei die zweite Schwächungslinie die erste Schwächungslinie umgibt. In einem streifenförmigen Bereich zwischen den beiden Schwächungslinien sind die Folien mit einem Haftklebstoff, z. B. ein Acrylatklebstoff, lösbar verbunden. Im übrigen Bereich sind die beiden Folien durch einen Permanentklebstoff, z. B. auf der Basis eines PU-Klebstoffes, trennfest miteinander verbunden. Beim Aufreißen der Verpackungsfolie erfolgt eine Trennung der inneren Folie an der ersten Schwächungslinie und eine Trennung der äußeren Folie an der zweiten Schwächungslinie. Da die Öffnungsfläche der inneren Folie über den Permanentklebstoff mit der äußeren Folie verbunden ist, wird beim Abheben des Folienabschnittes die Entnahmeöffnung freigegeben. Die Wiederverschließbarkeit ergibt sich durch die Anordnung des Haftklebstoffes, dessen Breite dem Abstand zwischen der ersten Schwächungslinie und der zweiten Schwächungslinie entspricht. Das Verfahren zur Herstellung der Verpackungsfolien ist aufwendig. Zunächst wird die innere Folie bereichsweise mit Haftklebstoff beschichtet, der in einem streifenförmigen Muster appliziert wird. Die beschichtete Folie durchläuft einen Trocknungsofen und wird dann in einer nachfolgenden Schneidstation mit einer Schwächungslinie versehen, welche die Aufreißöffnung umrandet. Zur Bildung der Außenschicht wird eine zweite Folie bereitgestellt, auf die ebenfalls in einem Muster ein Permanentklebstoff appliziert wird. Die beschichtete Folie durchläuft eine Trocknungsstation und wird in einer nachfolgenden Schneidstation ebenfalls mit einer Schwächungslinie versehen, welche die zweite Schwächungslinie der Verpackungsfolie bilden. Die Folienbahnen müssen anschließend passgenau zusammengeführt und miteinander verbunden werden, wobei auf die genaue Zuordnung der Schwächungslinie und der mit unterschiedlichen Klebstoffen beschichteten Flächen geachtet werden muss.

Ferner ist in der Schrift WO 2008/115693 A1 ein Verfahren zur Herstellung wiederverschließbarer Öffnungen in Folien beschrieben, bei dem zunächst eine erste Folie zugeschnitten und mit Schwächungslinien versehen wird, in einem zweiten Schritt ein Haftkleber in einem Muster aufgetragen wird, danach ebenfalls in einem Muster Klebstoff für die permanente Laminierung aufgebracht wird, wonach die erste Folie mit einer zweiten Folie verbunden wird und schließlich auch die zweite Folie mit Schnitten und Schwächungslinien versehen wird.

Durch EP 1 849 579 A1 ist ein Verfahren offenbart, um Aufreißverpackungen mit einer Schwächungslinie herzustellen. Dabei wird eine Schwächungslinie mittels Laserstrahl erzeugt.

Die US 2006/200107 A1 betrifft eine wiederverschließbare Verpackung für eine Mehrzahl von Wegwerfwindeln, deren Wiederverschließsystem mit der Umhüllung der Verpackung verbunden ist.

Vor diesem Hintergrund liegt der Erfindung das technologische Problem zugrunde, das Verfahren zur Herstellung einer mehrlagigen Verpackungsfolie, die entlang einer Schwächungslinie unter Freisetzen einer streifenförmigen Klebefläche aufgerissen werden kann, zu vereinfachen.

Gegenstand der Erfindung und Lösung dieser Aufgabe ist ein Verfahren nach Anspruch 1. Bei dem erfindungsgemäßen Verfahren wird zunächst eine mehrschichtige Folie hergestellt, die eine Außenschicht, eine Siegelschicht für die Verpackungsinnenseite und zwischen den beiden Schichten eine zumindest einlagige Funktionsschicht aus einem Haftklebstoff aufweist. Durch Stanzen oder mittels einer Lasertechnik werden in die vorgefertigte Folie anschließend an der Folienoberseite und an der Folienunterseite Abschnitte der Schwächungslinie eingebracht, die zueinander seitlich versetzt sind und sich von der Folienoberseite oder der Folienunterseite jeweils bis zu der Funktionsschicht erstrecken. Der seitliche Versatz der von der Folienoberseite bzw. Folienunterseite ausgehenden Schwächungslinienabschnitte bestimmt die Breite des als Wiederverschluss verwendbaren klebrigen Streifens, der freigelegt wird, wenn die Verpackungsfolie entlang der Schwächungslinie aufgerissen wird. Die Schwächungslinie wird in einem Muster appliziert, das eine Aufreißlasche formt. Dabei ist der von der Siegelschicht ausgehende erste Abschnitt der Schwächungslinie von einem zweiten Schwächungslinienabschnitt, der von der gegenüberliegenden Seite der Folie ausgeht, umgeben.

Im Rahmen des erfindungsgemäßen Verfahrens ist wesentlich, dass die aus einem Haftklebstoff bestehende Funktionsschicht vollflächig zwischen benachbarten Folienlagen eingebracht bzw. angeordnet wird und sich ohne Unterbrechungen über die gesamte Länge und Breite der Verpackungsfolie erstreckt. Die von der Folienoberseite und Folienunterseite ausgehenden Schwächungslinienabschnitte erstrecken sich bis in den Bereich der Funktionsschicht und enden dort innerhalb der Funktionsschicht oder an einer Grenzfläche zwischen der Funktionsschicht und einer benachbarten Folienlage. Beim Aufreißen der Verpackungsfolie kommt es zu einer Rissausbreitung entlang der Schwächungslinienabschnitte, wobei sich der Riss innerhalb der Funktionsschicht oder an einer Grenzfläche zu einer benachbarten Folienlage kontrolliert fortsetzt. Dabei ist es nicht notwendig, innerhalb der Funktionsschicht Zonen mit unterschiedlichen Haftkräften vorzusehen. Als Haftklebstoff für die Funktionsschicht eignen sich insbesondere Acrylatkleber, SB-Copolymere (SBS, SIS, SEBS), Silikonkautschukklebstoffe, Naturkautschukklebstoffe, Polyisobutylen und EVA.

Die mehrschichtige Folie kann aus einer Coextrusionsfolie bestehen, wobei die Außenschicht der Coextrusionsfolie bedruckt und mit einem Schutzlack beschichtet werden kann. In die bedruckte und mit dem Schutzlack versehene mehrschichtige Folie werden dann die Schwächungslinienabschnitte eingebracht. Die Siegelschicht und die Außenschicht der Coextrusionsfolie bestehen vorzugsweise aus Polyolefinschichten.

Gemäß einer bevorzugten Ausführung der Erfindung wird eine mehrschichtige Folie hergestellt und verwendet, die zwischen der Außenschicht und der Siegelschicht eine Zwischenschicht aufweist, wobei die Funktionsschicht zwischen der Zwischenschicht und der Siegelschicht angeordnet ist. Die Zwischenschicht und die Siegelschicht bestehen vorzugsweise aus Polyolefinschichten.

Weitere vorteilhafte Ausgestaltungen des erfindungsgemäßen Verfahrens werden in den Patentansprüchen 9 bis 17 beschrieben und im Folgenden anhand von Ausführungsbeispielen näher erläutert. Es zeigen schematisch:
- **Fig. 1**: eine nach dem erfindungsgemäßen Verfahren hergestellte Verpackungsfolie im Gebrauch,
- **Fig. 2 bis 8**: den Schichtenaufbau von Verpackungsfolien, die nach dem erfindungsgemäßen Verfahren hergestellt wurden.

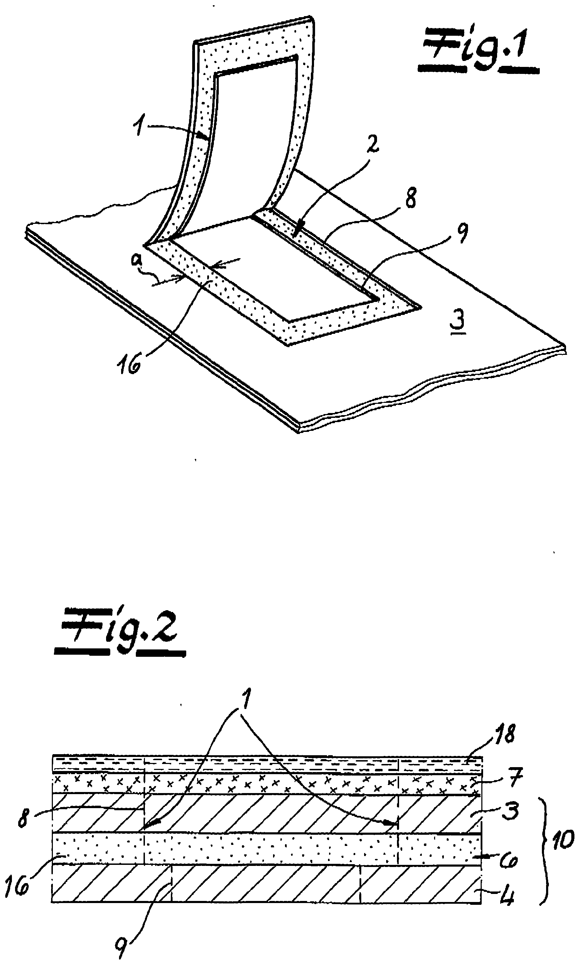

Die Fig. 1 zeigt eine mehrlagige Verpackungsfolie, die entlang einer Schwächungslinie 1 unter Freisetzen einer streifenförmigen Klebefläche 2 aufgerissen werden kann. Die streifenförmige Klebefläche 2 ermöglicht einen Wiederverschluss der Folie.

Zur Herstellung der Verpackungsfolie wird zunächst eine mehrschichtige Folie gefertigt, die gemäß den Darstellungen in Fig. 2 bis 8 eine als Verpackungsaußenseite geeignete und zumeist bedruckte Außenschicht 3, eine Siegelschicht 4 für die Verpackungsinnenseite und zwischen den beiden Schichten eine zumindest einlagige Funktionsschicht 6 aus einem Haftklebstoff 16 aufweist.

Gemäß einem ersten, in Fig. 2 dargestellten Ausführungsbeispiel besteht die mehrschichtige Folie aus einer Coextrusionsfolie, deren Außenschicht 3 bedruckt und mit einem Schutzlack 18 beschichtet wird. Das Druckbild ist in der Fig. 2 als Farbschicht 7 schematisch dargestellt worden. Die Außenschicht 3 und die Siegelschicht 4 bestehen vorzugsweise aus polyolefinischen Schichten.

In den Ausführungsbeispielen 3 bis 8 weist die mehrschichtige Folie zwischen der Außenschicht 3 und der Siegelschicht 4 eine Zwischenschicht 5 auf, die ebenso wie die Siegelschicht 4 vorzugsweise aus einer polyolefinischen Schicht besteht. Die Funktionsschicht 6 ist zwischen der Zwischenschicht 5 und der Siegelschicht 4 angeordnet. Die Außenschicht 3 kann beispielsweise aus einem Polyethylenterephthalat (PET), orientiertem Polypropylen (OPP, BOPP), orientiertem Polyamid (OPA) und dergleichen bestehen. Die Außenschicht 3 kann außenseitig bedruckt sein oder an der Innenseite invers bedruckt werden. Das Druckbild ist in den Fig. 2 bis 7 als Farbschicht 7 schematisch dargestellt worden. Als Außenschicht 3 kommt auch ein Schutzlack in Betracht. Die polyolefinischen Schichten 4, 5 bestehen beispielsweise aus Polyethylen oder Polypropylen. Für die Funktionsschicht 6 können als Haftklebstoff 16 Acrylatklebstoffe, Styrol-Butadien-Copolymere, Klebstoffe auf Basis eines Silikonkautschuks, Naturkautschuks sowie auch klebrige Polymere wie Polyisobutylen verwendet werden. Andere selbstklebende und dem Fachmann geläufige Klebharze sollen nicht ausgeschlossen sein.

In den vorgefertigten Folienverbund werden durch Stanzen oder mittels einer Lasertechnik an der Folienoberseite und an der Folienunterseite Abschnitte der Schwächungslinie 1 eingebracht, die zueinander seitlich um das Maß a versetzt sind und sich von der Folienoberseite oder der Folienunterseite jeweils bis zu der Funktionsschicht 6 erstrecken. Der Darstellung in Fig. 1 entnimmt man, dass die Schwächungslinie 1 in einem Muster appliziert wird, die eine Aufreißlasche formt. Dabei ist ein von der Siegelschicht (Folienunterseite) ausgehender erste Abschnitt 9 der Schwächungslinie von einem zweiten Schwächungslinienabschnitt 9, der von der gegenüberliegenden Seite des Folienverbundes ausgeht, umgeben. Der Abstand a zwischen diesen beiden Schwächungslinienabschnitten 8, 9 definiert die Breite der Klebefläche 2, die beim Aufreißen der Verpackungsfolie freigesetzt wird.

Anhand des Schichtenaufbaus der in den Fig. 2 bis 8 dargestellten Verpackungsfolien werden im Folgenden diverse Verfahrensvarianten des erfindungsgemäßen Verfahrens erläutert.

Zur Herstellung der in Fig. 2 dargestellten Verpackungsfolie wird eine mehrschichtige Coextrusionsfolie 10 mit zwei polyolefinischen Schichten 3, 4 und einer zwischen diesen beiden Schichten angeordneten Funktionsschicht 6 aus einem Haftklebstoff 16 hergestellt. Die Außenschicht 3 der Coextrusionsfolie wird bedruckt (Farbschicht 7) und mit einem Schutzlack 18 beschichtet. In die bedruckte und mit dem Schutzlack 18 versehene mehrschichtige Folie werden anschließend Schwächungslinienabschnitte 8, 9 eingebracht, die sich von der Folienoberseite oder der Folienunterseite ausgehend jeweils bis zu der Funktionsschicht 6 erstreckt. Die Schwächungslinienabschnitte 8, 9 enden an der Grenzfläche zwischen der Funktionsschicht 6 und der die Verpackungsinnenseite bildenden Siegelschicht 4. Sie können auch innerhalb der Funktionsschicht 6 enden oder sich auch in vertikaler Richtung überlappen.

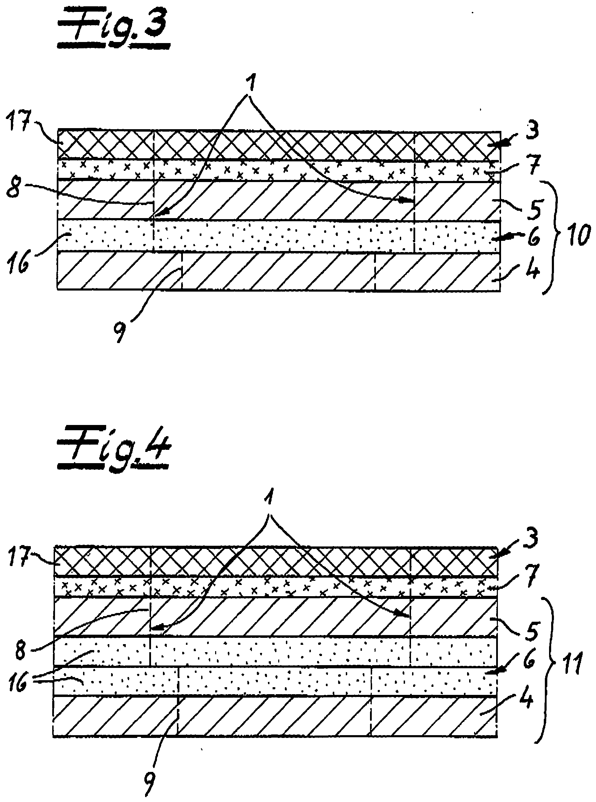

Zur Herstellung der in Fig. 3 dargestellten Verpackungsfolie wird ebenfalls eine Coextrusionsfolie 10 mit zwei polyolefinischen Schichten 4, 5 und einer zwischen den beiden Polyolefinschichten 4, 5 angeordneten Funktionsschicht 6 aus einem Haftklebstoff 16 hergestellt. Durch Aufkaschieren einer die Außenschicht 3 bildenden Folie 17 wird die Coextrusionsfolie 10 zu einem Folienverbund weiterverarbeitet, in den anschließend Schwächungslinienabschnitte 8, 9 eingebracht werden, die sich von der Folienoberseite oder der Folienunterseite ausgehend jeweils bis zu der Funktionsschicht 6 erstrecken. Gemäß der Darstellung in Fig. 3 enden die Schwächungslinienabschnitte 8, 9 an der Grenzfläche zwischen der Funktionsschicht 6 und der die Verpackungsinnenseite bildenden Siegelschicht 4. Die Schwächungslinienabschnitte 8, 9 können auch innerhalb der Funktionsschicht 6 enden oder sich auch in vertikaler Richtung überlappen. Im Rahmen der Erfindung liegt es beispielsweise, dass der in die Folienunterseite eingebrachte Schwächungslinienabschnitt 9 sich bis zur Grenzfläche zwischen der Funktionsschicht 6 und der polyolefinischen Zwischenschicht 5 erstreckt, während der von der Folienoberseite ausgehende Schwächungslinienabschnitt 8 entsprechend der Darstellung in Fig. 3 sich bis zur Grenzfläche zwischen der Funktionsschicht 6 und der unteren Siegelschicht 4 erstreckt. Die Außenfolie 17 ist im Ausführungsbeispiel an ihrer Innenseite invers bedruckt. Der inverse Aufdruck wurde als Farbschicht 7 dargestellt. Das anhand der Fig. 3 beschriebene Verfahren lässt sich besonders einfach durchführen und erfordert beispielsweise für die Applikation der Funktionsschicht 6 keine besonderen Applikationsanlagen.

Zur Fertigung der in Fig. 4 dargestellten Verpackungsfolie wird zunächst durch Blasfolienextrusion ein mindestens zweischichtiger Folienschlauch hergestellt, der eine äußere polyolefinische Schicht und eine Innenschicht aus einem Haftklebstoff 16 bzw. einem Polymer mit klebrigen Eigenschaften aufweist. Die Innenschicht des Folienschlauches besteht beispielsweise aus Metallocen-PE, d. h. einem unter Verwendung von Metallocen-Katalysatoren hergestellten Polyethylen, oder EVA. Der Folienschlauch wird zu einer mehrlagigen Flachfolie 11 zusammengelegt, die äußere polyolefinische Schichten 4, 5 sowie eine aus Haftklebstoff 16 bestehende zweilagige Funktionsschicht 6 aufweist. Die Flachfolie 11 wird durch Aufkaschieren einer die Außenschicht 3 bildenden Folie 17 zu einem Folienverbund weiterverarbeitet, in den anschließend die Schwächungslinienabschnitte 8, 9 eingebracht werden, die sich von der Folienunterseite oder der Folienoberseite ausgehend jeweils bis zu der Funktionsschicht 6 erstrecken. Die Schwächungslinienabschnitte 8, 9 enden innerhalb der Funktionsschicht 6, vorzugsweise an der durch Flachlegen des Folienschlauches gebildeten Grenzfläche. Die Außenfolie 17, die beispielsweise aus PET oder BOPP bestehen kann, kann außenseitig bedruckt werden. Im Ausführungsbeispiel wurde die aufzukaschierende Folie 17 an ihrer der mehrlagigen Flachfolie 11 zugewandten Innenfläche invers bedruckt. Das Druckbild ist schematisch als Farbschicht 7 dargestellt.

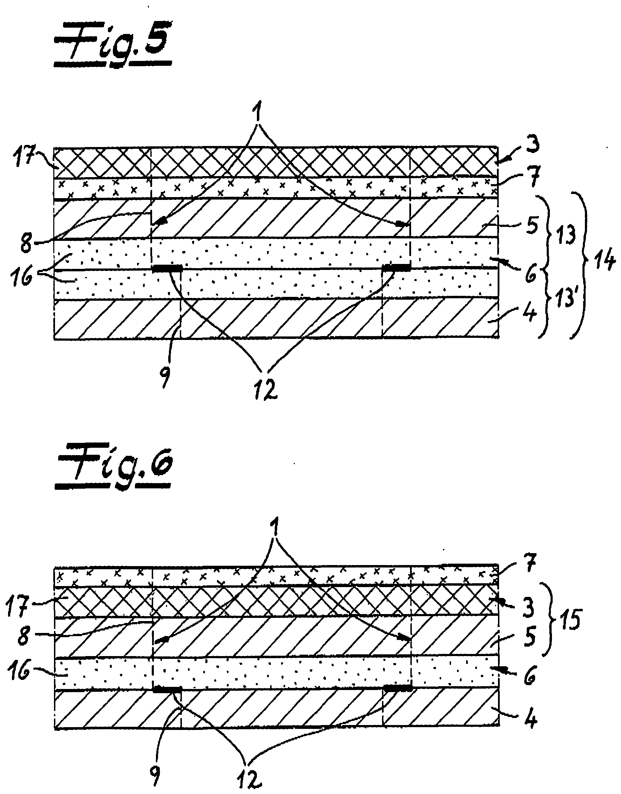

Das Aufreißverhalten der Verpackungsfolie kann noch verbessert werden, wenn auf eine an die Funktionsschicht 6 angrenzende Folienoberfläche Streifen aus einem Dehäsivlack 12 in einem an den Verlauf der später erzeugten Schwächungslinie 1 angepassten Muster aufgedruckt werden. Als Dehäsivlack, der in der Praxis auch als Releaselack bezeichnet wird, können PA-Systeme, 2K-Acrylat-Systeme, Silikon und PVC-Systeme verwendet werden. Die Applikation des Dehäsivlacks 12 kann im Rahmen des erfindungsgemäßen Verfahrens auf verschiedene Weise berücksichtigt werden. Die Methoden werden im Folgenden anhand der Fig. 5 bis 8 erläutert.

Zur Herstellung der in Fig. 5 dargestellten Verpackungsfolie werden zunächst zwei Coextrusionsfolien 13, 13' hergestellt, die an ihrer einen Seite eine siegelfähige Polyolefinschicht 4, 5 und an ihrer anderen Seite eine Schicht aus einem die Funktionsschicht 6 bildenden Haftklebstoff 16 aufweisen. Auf eine der beiden Coextrusionsfolien 13, 13' werden Streifen aus einem Dehäsivlack 12 in einem Muster aufgedruckt, das an den Verlauf der später erzeugten Schwächungslinie 1 angepasst ist. Die Applikation des Dehäsivlacks 12 erfolgt dabei auf die aus dem Haftklebstoff 16 bestehende Schicht der ausgewählten Coextrusionsfolie 13, 13'. Die Coextrusionsfolien 13, 13'werden anschließend zu einem Laminat 14 verbunden, das Polyolefinschichten 4, 5 sowie eine doppellagige Funktionsschicht 6 aus Haftklebstoff aufweist. In die Funktionsschicht 6 sind dabei Zonen eingelagert, die aus dem Dehäsivlack 12 bestehen und die Verbundfestigkeit zwischen den beiden Klebstofflagen 6, 6' lokal reduzieren. Das Laminat 14 wird durch Aufkaschieren einer die Außenschicht 3 bildenden Folie 17 zu einem Folienverbund weiterverarbeitet, in den anschließend die Schwächungslinienabschnitte 8, 9 eingebracht werden, die sich von der Folienoberseite oder der Folienunterseite ausgehend jeweils bis zu der Funktionsschicht 6 erstrecken. Der Darstellung in Fig. 5 entnimmt man, dass die von der Folienoberseite und der Folienunterseite ausgehenden Abschnitte 8, 9 der Schwächungslinie 1 zueinander so versetzt werden, dass die Schwächungslinienabschnitte 8, 9 im Wesentlichen an die Ränder der aus dem Dehäsivlack 12 bestehenden Streifen angrenzen.

Zur Fertigung der in Fig. 6 dargestellten Verpackungsfolie wird durch Co-extrusion oder in einem Kaschierverfahren ein zumindest zweilagiges Folienmaterial 15 hergestellt, welches an seiner einen Seite eine Polyolefinschicht 5 und an seiner anderen Seite eine als Verpackungsaußenseite geeignete Außenschicht 3 aufweist. Auf die Polyolefinschicht 5 des Folienmaterials 15 wird unter Verwendung eines flächig aufgetragenen Haftklebstoffes 16 anschließend eine polyolefinische Siegelfolie 4 aufkaschiert, wobei auf die Innenseite der Siegelfolie 4 oder auf die Polyolefinschicht 5 des Folienmaterials 15 vor dem Kaschierprozess Streifen aus einem Dehäsivlack 12 aufgedruckt werden. Der Dehäsivlack 12 wird dabei in einem Muster appliziert, das an den Verlauf der später erzeugten Schwächungslinie 1 angepasst ist. In den nach dem beschriebenen Verfahren hergestellten Folienverbund, der mindestens vier Schichten umfasst, werden anschließend die Schwächungslinienabschnitte 8, 9 eingebracht, die sich jeweils von der Folienoberseite oder der Folienunterseite ausgehend bis zu dem die Funktionsschicht 6 bildenden Haftklebstoff 16 erstrecken. Die von der Folienoberseite und der Folienunterseite ausgehenden Abschnitte der Schwächungslinie 1 werden so versetzt, dass die Abschnitte 8, 9 der Schwächungslinie 1 im Wesentlichen an die Ränder der aus dem Dehäsivlack 12 bestehenden Streifen angrenzen.

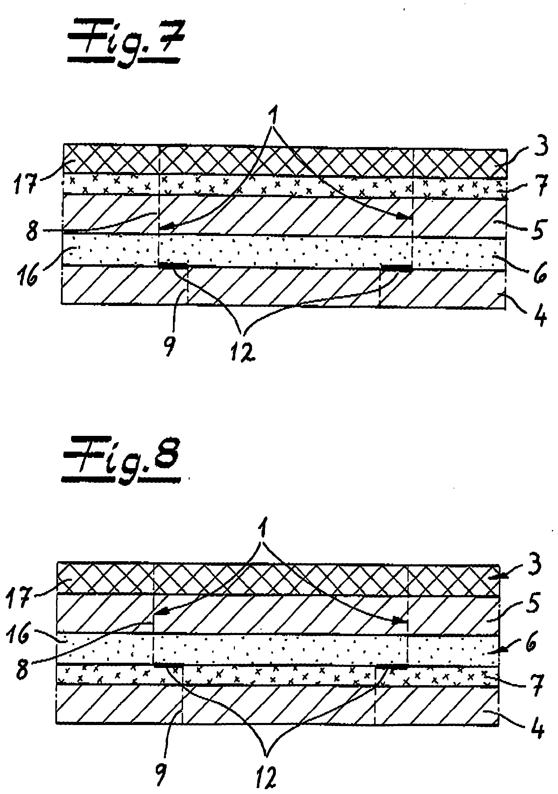

Die in Fig. 6 dargestellte Folie ist an der Außenseite der oberen, z. B. aus PET oder BOPP bestehenden Außenschicht 3 bedruckt. Gemäß der Darstellung in Fig. 7 kann der als Farbschicht 7 dargestellte Aufdruck jedoch auch an der Innenseite der die Außenschicht 3 bildenden Folie 17 als inversives Druckbild aufgebracht werden. Gemäß der Darstellung in Fig. 8 besteht schließlich auch die Möglichkeit, dass die Siegelfolie 4 an ihrer der Funktionsschicht 6 zugewandten Innenseite bedruckt wird.

## Patentansprüche

1. Verfahren zur Herstellung einer mehrlagigen Verpackungsfolie, die entlang einer Schwächungslinie (1) unter Freisetzen einer streifenförmigen Klebefläche (2) aufgerissen werden kann,
wobei zunächst eine mehrschichtige Folie hergestellt wird, die eine Außenschicht (3), eine Siegelschicht (4) für die Verpackungsinnenseite und zwischen den beiden Schichten eine zumindest einlagige Funktionsschicht (6) aus einem Haftklebstoff (16) aufweist,
wobei die aus dem Haftklebstoff (16) bestehende Funktionsschicht (6) vollflächig zwischen benachbarten Folienlagen angeordnet wird und sich ohne Unterbrechungen über die gesamte Länge und Breite der Verpackungsfolie erstreckt,
wobei an der Folienoberseite und an der Folienunterseite in die vorgefertigte Folie anschließend durch Stanzen oder mittels einer Lasertechnik Abschnitte (8, 9) der Schwächungslinie (1) eingebracht werden, wobei die von der Folienoberseite und der Folienunterseite ausgehenden Abschnitte zueinander seitlich versetzt sind und sich von der Folienoberseite oder der Folienunterseite jeweils bis zu der Funktionsschicht (6) erstrecken und dort innerhalb der Funktionsschicht (6) oder an einer Grenzfläche zwischen der Funktionsschicht und einer benachbarten Folienlage enden.

2. Verfahren nach Anspruch 1, **dadurch gekennzeichnet, dass** die Schwächungslinie (1) in einem Muster appliziert wird, die eine Aufreißlasche formt, wobei ein von der Siegelschicht (4) ausgehender erster Abschnitt (9) der Schwächungslinie (1) von einem zweiten Schwächungslinienabschnitt (8), der von der gegenüberliegenden Seite des Folienverbundes ausgeht, umgeben ist.

3. Verfahren nach Anspruch 1 oder 2, **dadurch gekennzeichnet, dass** der Haftklebstoff (16) aus einem Acrylatklebstoff, einem Styrol-Butadien(SB)-Copolymer, einem Klebstoff auf Basis eines Silikonkautschuks, Naturkautschuks oder Polyisobutylen (PIB) oder EVA besteht.

4. Verfahren nach einem der Ansprüche 1 bis 3, **dadurch gekennzeichnet, dass** die mehrschichtige Folie aus einer Coextrusionsfolie besteht.

5. Verfahren nach Anspruch 4, **dadurch gekennzeichnet, dass** die Außenschicht (3) der Coextrusionsfolie bedruckt und mit einem Schutzlack (18) beschichtet wird und dass in die bedruckte und mit dem Schutzlack (18) versehene mehrschichtige Folie die Schwächungslinienabschnitte (8, 9) eingebracht werden.

6. Verfahren nach Anspruch 4 oder 5, **dadurch gekennzeichnet, dass** die Außenschicht (3) der Coextrusionsfolie und die Siegelschicht (4) aus polyolefinischen Schichten bestehen.

7. Verfahren nach einem der Ansprüche 1 bis 3, **dadurch gekennzeichnet, dass** die mehrschichtige Folie zwischen der Außenschicht (3) und der Siegelschicht (4) eine Zwischenschicht (5) aufweist, wobei die Funktionsschicht (6) zwischen der Zwischenschicht (5) und der Siegelschicht (4) angeordnet ist.

8. Verfahren nach Anspruch 7, **dadurch gekennzeichnet, dass** die Zwischenschicht (5) und die Siegelschicht (4) aus Polyolefinschichten bestehen.

9. Verfahren nach einem der Ansprüche 1 bis 3, **dadurch gekennzeichnet, dass** eine Coextrusionsfolie (10) mit zwei polyolefinischen Schichten (4, 5) und einer zwischen den beiden Polyolefinschichten (4, 5) angeordneten Funktionsschicht (6) aus einem Haftklebstoff (16) hergestellt und durch Aufkaschieren einer die Außenschicht (3) bildenden Folie (17) zu einem Folienverbund weiterverarbeitet wird, in den anschließend die Schwächungslinienabschnitte (8, 9) eingebracht werden.

10. Verfahren nach einem der Ansprüche 1 bis 3, **dadurch gekennzeichnet, dass** durch Blasfolienextrusion ein mindestens zweischichtiger Folienschlauch hergestellt wird, die eine äußere Polyolefinschicht und eine Innenschicht aus einem Haftklebstoff (16) aufweist, dass der Folienschlauch zu einer mehrlagigen Flachfolie (11) zusammengelegt wird, die Polyolefinschichten (4, 5) sowie eine aus Haftklebstoff (16) bestehende zweilagige Funktionsschicht (6) aufweist, und dass die Flachfolie (11) durch Aufkaschieren einer die Außenschicht (3) bildenden Folie (17) zu einem Folienverbund weiterverarbeitet wird, in den anschließend die Schwächungslinienabschnitte (8, 9) eingebracht werden.

11. Verfahren nach Anspruch 9 oder 10, **dadurch gekennzeichnet, dass** die aufzukaschierende Folie (17) an ihrer der Coextrusionsfolie (10) oder mehrlagigen Flachfolie (11) zugewandten Innenfläche invers bedruckt wird.

12. Verfahren nach einem der Ansprüche 1 bis 3, **dadurch gekennzeichnet, dass** auf eine an die Funktionsschicht (6) angrenzende Folienoberfläche Streifen aus einem Dehäsivlack (12) in einem Muster aufgebracht werden, welches an den Verlauf der später erzeugten Schwächungslinie (1) angepasst ist.

13. Verfahren nach Anspruch 12, **dadurch gekennzeichnet, dass** zwei Coextrusionsfolien (13, 13') hergestellt werden, die an ihrer einen Seite eine siegelfähige Polyolefinschicht (4, 5) und an ihrer anderen Seite eine Schicht aus einem Haftklebstoff (16) aufweisen, dass auf die aus einem Haftklebstoff (16) bestehende Klebstoffschicht einer der beiden Coextrusionsfolien (13, 13') Streifen aus einem Dehäsivlack (12) in einem an den Verlauf der später erzeugten Schwächungslinie (1) angepassten Muster aufgedruckt werden, dass die Coextrusionsfolien (13, 13') zu einem Laminat (14) verbunden werden, das eine doppellagige Funktionsschicht (6) aus Haftklebstoff (16) und polyolefinische Schichten (4, 5) aufweist, und dass das Laminat (14) durch Aufkaschieren einer die Außenschicht (3) bildenden Folie (17) zu einem Folienverbund weiterverarbeitet wird, in den anschließend die Schwächungslinienabschnitte (8, 9) eingebracht werden, wobei die von der Folienoberseite und der Folienunterseite ausgehenden Abschnitte (8, 9) der Schwächungslinie (1) zueinander so versetzt werden, dass die Schwächungslinienabschnitte im Wesentlichen an die Ränder der aus einem Dehäsivlack (12) bestehenden Streifen angrenzen.

14. Verfahren nach Anspruch 13, **dadurch gekennzeichnet, dass** durch Co-extrusion oder im Kaschierverfahren ein zumindest zweilagiges Folienmaterial (15) hergestellt wird, welches an seiner einen Seite eine Polyolefinschicht (5) und an seiner anderen Seite eine als Verpackungsaußenseite geeignete Außenschicht (3) aufweist, dass auf die Polyolefinschicht (5) unter Verwendung eines flächig aufgetragenen Haftklebstoffes (16) eine Siegelfolie (4) aufkaschiert wird, wobei auf die Innenseite der Siegelfolie (4) oder auf die Polyolefinschicht (5) des Folienmaterials (15) vor dem Kaschierprozess Streifen aus einem Dehäsivlack (12) in einem an den Verlauf der später erzeugten Schwächungslinie (1) angepassten Muster aufgedruckt werden und dass in den resultierenden Folienverbund anschließend die Schwächungslinienabschnitte (8, 9) eingebracht werden, wobei die von der Folienoberseite und der Folienunterseite ausgehenden Schwächungslinienabschnitte (8, 9) zueinander so versetzt werden, dass die Abschnitte der Schwächungslinien im Wesentlichen an die Ränder der aus einem Dehäsivlack (12) bestehenden Streifen angrenzen.

15. Verfahren nach Anspruch 14, **dadurch gekennzeichnet, dass** die Außenschicht (3) des Folienmaterials (15) aus einer Folie (17) besteht, die an der Innenseite invers bedruckt wird.

16. Verfahren nach Anspruch 14, **dadurch gekennzeichnet, dass** die Außenschicht (3) des Folienverbundes bedruckt wird, bevor die Schwächungslinienabschnitte (8, 9) in den Folienverbund eingebracht werden.

17. Verfahren nach Anspruch 14, **dadurch gekennzeichnet, dass** die Siegelfolie (4) an ihrer der Funktionsschicht (6) zugewandten Innenseite bedruckt wird.

## Claims

1. A method for producing a multi-layer packaging film which can be torn open along a tear line (1), thereby exposing a strip-shaped adhesive surface (2),
wherein initially a multi-layer film is produced, which comprises an outer layer (3), a sealing layer (4) for the inside of the packaging and a function layer (6) from an adhesive (16) comprising at least one single-layer between the two layers,
wherein the function layer (6) consisting of the adhesive (16) is arranged full-surface between adjacent film layers and extends uninterruptedly across the entire length and width of the packaging film,
wherein sections (8, 9) of the tear line (1) are provided subsequently in the prefabricated film on its topside and its underside by means of punching or by means of a laser technique, wherein the sections extending from the film topside and the film underside are laterally offset from one another, extending respectively from the film topside or the film underside as far as the function layer (6) and ending there within the function layer (6) or at a boundary surface between the function layer and an adjacent film layer.

2. The method according to claim 1, **characterised in that** the tear line (1) is applied in a pattern, which forms a pull tab, wherein a first section (9) of the tear line (1) extending from the sealing layer (4) is surrounded by a second tear line section (8), which extends from the opposite side of the film composite.

3. The method according to claim 1 or 2, **characterised in that** the adhesive (16) consists of an acrylate adhesive, a styrene butadiene (SB) copolymer, an adhesive based on a silicon rubber, natural rubber or poly-isobutylene (PIB) or EVA.

4. The method according to one of claims 1 to 3, **characterised in that** the multilayer film consists of a co-extrusion film.

5. The method according to claim 4, **characterised in that** the outer layer (3) of the co-extrusion film is imprinted and covered with a protective varnish (18) and that the tear line sections (8, 9) are provided in the multilayer imprinted film provided with the protective varnish (18).

6. The method according to claim 4 or 5, **characterised in that** the outer layer of the co-extrusion film and the sealing layer (4) consist of polyolefin-based layers.

7. The method according to one of claims 1 to 3, **characterised in that** the multilayer film between the outer layer (3) and the sealing layer (4) has an intermediate layer (5), wherein the function layer (6) is arranged between the intermediate layer (5) and the sealing layer (4).

8. The method according to claim 7, **characterised in that** the intermediate layer (5) and the sealing layer (4) consist of polyolefin layers.

9. The method according to one of claims 1 to 3, **characterised in that** a co-extrusion film (10) is manufactured with two polyolefin-based layers (4, 5) and a functional layer from an adhesive (16) arranged between the two polyolefin layers (4, 5) and further processed to form a film composite by laminating a film (17) forming the outer layer (3) onto it, in which subsequently the tear line sections (8, 9) are provided.

10. The method according to one of claims 1 to 3, **characterised in that** an at least two-layer film tube is produced by blown film extrusion, which comprises an outer polyolefin layer and an inner layer from an adhesive (16), **in that** the film tube is folded up to form a multilayer flat film (11), which comprises polyolefin layers (4, 5) as well as a two-layer function layer (6) consisting of adhesive (16) and **in that** the flat film (11) is further processed to form a film composite by laminating a film (17) forming the outer layer (3) onto it, in which subsequently the tear line sections (8, 9) are provided.

11. The method according to claim 9 or 10, **characterised in that** the film to be laminated-on is inversely imprinted on its inner surface facing the co-extrusion film (10) or multilayer flat film (11).

12. The method according to one of claims 1 to 3, **characterised in that** strips of a dehesive varnish (12) are applied to a film surface bordering the function layer (6) in a pattern, which is adapted to suit the progression of the tear line (1) to be produced later.

13. The method according to claim 12, **characterised in that** two co-extrusion films (13, 13') are produced, which on one side comprise a sealable polyolefin layer (4, 5) and on the other side a layer from an adhesive (16), **in that** strips of a dehesive varnish (12) are printed onto the adhesive layer consisting of an adhesive (16) of one of the two co-extrusion films (13, 13') in a pattern adapted to the progression of the tear line (1) to be produced later, **in that** the co-extrusion films (13, 13') are combined to form a laminate (14) which comprises a double-walled function layer (6) from an adhesive (16) and polyolefin-based layers (4, 5), and **in that** the laminate (14) is further processed by laminating a film (17) forming the outer layer (3) onto it in order to form a film composite, in which subsequently the tear line sections (8, 9) are provided, wherein the sections (8, 9) of the tear line (1) extending from the film topside and the film underside are offset from one another in such a way that the tear line sections (8, 9) essentially border the edges of the strips consisting of a dehesive varnish (12).

14. The method according to claim 13, **characterised in that** an at least two-layer film material (15) is produced by co-extrusion or in a laminating process, which on its one side comprises a polyolefin layer (5) and on its other side an outer layer (3) suitable as the outside of a packaging, **in that** a sealing film (4) is laminated onto the polyolefin layer (5) by means of an areally applied adhesive (16), wherein prior to the laminating process strips of a dehesive varnish (12) are applied to the inside of the sealing film (4) or the polyolefin layer (5) of the film material (15) in a pattern adapted to the progression of the tear line (1) to be produced later and **in that** subsequently the tear line sections (8, 9) are provided in the resulting film composite, wherein the tear line sections (8, 9) extending from the film topside and the film underside are offset from one another such that the sections of the tear lines essentially border the edges of the strips consisting of a dehesive varnish (12).

15. The method according to claim 14, **characterised in that** the outer layer (3) of the film material (15) consists of a film (17), which is inversely imprinted on the inside.

16. The method according to claim 14, **characterised in that** the outer layer (3) of the film composite is imprinted before the tear line sections (8, 9) are provided in the film composite.

17. The method according to claim 14, **characterised in that** the sealing film (4) is imprinted on its inside facing the function layer (6).

## Revendications

1. Procédé destiné à fabriquer un film d'emballage multicouches pouvant être déchiré le long d'une ligne d'affaiblissement (1) en libérant une surface de collage (2) en forme de ruban,
lors duquel on fabrique d'abord un film multicouches qui comporte une couche extérieure (3), une couche de scellage (4) pour la face intérieure de l'emballage et entre les deux couches, une couche fonctionnelle (6) au moins monocouche en un agent adhésif (16),
la couche fonctionnelle (6) constituée de l'agent adhésif (16) étant placée à pleine surface entre des couches de film voisines et s'étendant sans interruptions sur l'ensemble de la longueur et de la largeur du film d'emballage,
lors duquel, on ménage ensuite par estampage ou au moyen d'une technique au laser dans le film préfabriqué des segments (8, 9) de la ligne d'affaiblissement (1) sur la face supérieure du film et sur la face inférieure du film, les segments partant de la face supérieure du film et de la face inférieure du film étant latéralement décalés les uns par rapport aux autres et s'étendant à partir de la face supérieure du film ou de la face inférieure du film chacun jusqu'à la couche fonctionnelle (6) et s'y terminant à l'intérieur de la couche fonctionnelle (6) ou sur une surface limite entre la couche fonctionnelle et une couche de film voisine.

2. Procédé selon la revendication 1, **caractérisé en ce que** qu'on applique la ligne d'affaiblissement (1) selon un motif qui forme une patte à déchirer, un premier segment (9) de la ligne d'affaiblissement (1) partant de la couche de scellage (4) étant entouré par un deuxième segment (8) de la ligne d'affaiblissement qui part du côté opposé du composé de films.

3. Procédé selon la revendication 1 ou 2, **caractérisé en ce que** l'agent adhésif (16) est constitué d'un adhésif acrylique, d'un copolymère styrène-butadiène(SB), d'un adhésif sur base d'un caoutchouc de silicone, d'un caoutchouc naturel ou d'un polyisobutylène (PIB) ou EVA.

4. Procédé selon l'une quelconque des revendications 1 à 3, **caractérisé en ce que** le film multicouches est constitué d'un film de coextrusion.

5. Procédé selon la revendication 4, **caractérisé en ce qu'**on imprime et on revêt d'un vernis protecteur (18) la couche extérieure (3) du film de coextrusion et **en ce qu'**on ménage les segments (8, 9) de la ligne d'affaiblissement dans le film multicouches imprimé et muni de vernis protecteur (18).

6. Procédé selon la revendication 4 ou 5, **caractérisé en ce que** la couche extérieure (3) du film de coextrusion et la couche de scellage (4) sont constituées de couches polyoléfines.

7. Procédé selon l'une quelconque des revendications 1 à 3, **caractérisé en ce que** le film multicouches entre la couche extérieure (3) et la couche de scellage (4) comporte une couche intermédiaire (5), la couche fonctionnelle (6) étant placée entre la couche intermédiaire (5) et la couche de scellage (4).

8. Procédé selon la revendication 7, **caractérisé en ce que** la couche intermédiaire (5) et la couche de scellage (4) sont composées de couches polyoléfines.

9. Procédé selon l'une quelconque des revendications 1 à 3, **caractérisé en ce qu'**on fabrique un film de coextrusion (10) avec deux couches polyoléfines (4, 5) et une couche fonctionnelle (6) en un agent adhésif (16) placée entre les deux couches polyoléfines (4, 5) et par contre-collage d'un film (17) formant la couche extérieure (3), on le transforme ultérieurement en un composé de films, dans lequel on ménage ensuite les segments (8, 9) de la ligne d'affaiblissement.

10. Procédé selon l'une quelconque des revendications 1 à 3, **caractérisé en ce que** par extrusion de film à bulles d'air, on fabrique un film tubulaire au moins bicouches qui comporte une couche polyoléfine extérieure et une couche intérieure en un agent adhésif (16), **en ce qu'**on plie le film tubulaire en un film plat (11) multicouches qui comporte des couches polyoléfines (4, 5) ainsi qu'une couche fonctionnelle (6) bicouches constituée d'un agent adhésif (16) et **en ce que** par contre-collage d'un film (17) formant la couche extérieure (3), on transforme ultérieurement le film plat (11) en un composé de films, dans lequel on ménage ensuite les segments (8, 9) de la ligne d'affaiblissement.

11. Procédé selon la revendication 9 ou 10, **caractérisé en ce qu'**on applique une impression inverse sur le film (17) devant être contre-collé, sur sa face intérieure dirigée vers le film de coextrusion (10) ou sur son film plat (11) multicouches.

12. Procédé selon l'une quelconque des revendications 1 à 3, **caractérisé en ce que** sur une surface de film adjacente à la couche fonctionnelle (6), on applique des bandes en un vernis déhésif (12) selon un motif qui est adapté au trajet de la ligne d'affaiblissement (1) créée plus tard.

13. Procédé selon la revendication 12, **caractérisé en ce qu'**on fabrique deux films de coextrusion (13, 13') qui comportent sur l'un de leurs côtés une couche polyoléfine (4, 5) scellable et sur leur autre côté une couche en un agent adhésif (16), **en ce qu'**on imprime sur la couche d'agent adhésif constituée d'un agent adhésif (16) de l'un des deux films de coextrusion (13, 13') des bandes en un vernis déhésif (12) selon un motif adapté à la ligne d'affaiblissement (1) créée plus tard, **en ce qu'**on assemble les films de coextrusion (13, 13') en un laminé (14) qui comporte une couche fonctionnelle (6) bicouches en agent adhésif (16) et des couches polyoléfines (4, 5) et **en ce que** par contre-collage d'un film (17) formant la couche extérieure (3), on transforme ultérieurement le laminé (14) en un composé de films dans lequel on ménage ensuite les segments (8, 9) de la ligne d'affaiblissement (8, 9), sachant qu'on décale les uns par rapport aux autres les segments (8, 9) de la ligne d'affaiblissement (1) partant de la face supérieure du film et de la face inférieure du film de telle sorte que les segments de la ligne d'affaiblissement soient sensiblement adjacents aux bords des bandes constituées d'un vernis déhésif(12).

14. Procédé selon la revendication 13, **caractérisé en ce que** par coextrusion ou par procédé de contre-collage, on fabrique une matière en film (15) au moins bicouches, laquelle comporte sur l'un de ses côtés une couche polyoléfine (5) et sur son autre côté une couche extérieure (3) adaptée en tant que face extérieure d'emballage, **en ce que** sur la couche polyoléfine (5), en utilisant un agent adhésif (16) appliqué à pleine surface, on contre-colle un film de scellage (4), sachant que sur la face intérieure du film de scellage (4) ou sur la couche polyoléfine (5) de la matière en film (15), avant le processus de contre-collage, on imprime des bandes en un vernis déhésif(12) selon un motif adapté au trajet de la ligne d'affaiblissement (1) créée plus tard et **en ce que** dans le composé de films résultant, on ménage ensuite les segments (8, 9) de la ligne d'affaiblissement, sachant qu'on décale l'un par rapport à l'autre les segments (8, 9) de la ligne d'affaiblissement partant de la face supérieure de film et de la face inférieure de film de telle sorte que les segments de la ligne d'affaiblissement soient sensiblement adjacents aux bords des bandes constituées d'un vernis déhésif (12).

15. Procédé selon la revendication 14, **caractérisé en ce que** la couche extérieure (3) de la matière en film (15) est constituée d'un film (17) sur la face intérieure duquel on applique une impression inverse.

16. Procédé selon la revendication 14, **caractérisé en ce qu'**on imprime la couche extérieure (3) du composé de films, avant de ménager les segments (8, 9) des lignes d'affaiblissement dans le composé de films.

17. Procédé selon la revendication 14, **caractérisé en ce qu'**on imprime le film de scellage (4) sur sa face intérieure dirigée vers la couche fonctionnelle (6).
